# EUROPEAN PATENT APPLICATION

(11) **EP 4 840 702 A1**
(43) Date of publication of application: **18.11.2026**
(21) Application number: 25829420.6
(22) Date of filing: 15.04.2025
(51) Int. Cl.: B60R 19/48

(54) **FRONT-END ANTI-COLLISION ASSEMBLY AND VEHICLE**

(30) Priority: 19.06.2024 CN 202410791646
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: WANG, Dong, Hangzhou, Zhejiang 310051 (CN); GAO, Yingxin, Hangzhou, Zhejiang 310051 (CN); WANG, Ruizhuo, Hangzhou, Zhejiang 310051 (CN); YANG, Guannan, Hangzhou, Zhejiang 310051 (CN); WANG, Miao, Hangzhou, Zhejiang 310051 (CN); WANG, Pengxiang, Hangzhou, Zhejiang 310051 (CN); ZHOU, Dayong, Hangzhou, Zhejiang 310051 (CN)
(74) Representative: Murgitroyd & Company
(86) International application number: PCT/CN2025/089072
(87) International publication number: WO 2025/260936

(57) **Abstract**

A front-end anti-collision assembly and a vehicle are provided. The front-end anti-collision assembly of the present disclosure includes an anti-collision cross-member structure, a condenser component, and an adapter bracket. The condenser component includes a condenser, a first buffer structure, and a second buffer structure, the first buffer structure and the second buffer structure are respectively connected to two ends of the condenser in a vertical direction, the first buffer structure is connected to the adapter bracket, and the second buffer structure is configured for connection with a vehicle frame; and the adapter bracket connects the anti-collision cross-member structure and the first buffer structure. When the front-end anti-collision assembly is subjected to a frontal impact, the anti-collision cross-member structure pushes the first buffer structure to be separated from the adapter bracket, and the second buffer structure is configured for maintaining a flexible connection with the vehicle frame.

## Description

### CROSS-REFERENCE TO RELATED APPLICATIONS

The present disclosure is based on and claims priority to Chinese Patent Application No. 202410791646.X filed on June 19, 2024, the entire contents of which are incorporated herein by reference.

### TECHNICAL FIELD

The present disclosure relates to, but is not limited to, the technical field of vehicle components, and in particular, to a front-end anti-collision assembly and a vehicle.

### BACKGROUND

With the rapid development of the automobile industry, the vehicle population is on the rise, and the probability of collision accidents is also increasing. Among these, the probability of low-speed collisions on urban roads is particularly high. A front-end anti-collision structure of a passenger vehicle is a primary protective component in a low-speed collision of the vehicle, and usually can protect other high-cost components at a front end, such as a front longitudinal rail, a front subframe, and the like.

In many existing vehicle models, a case where a cooling and heat-dissipation system is damaged may occur in a low-speed collision accident, and thus, the cooling and heat-dissipation system needs to be replaced during repair. Because the cooling and heat-dissipation system is relatively expensive, the repair costs incurred when it is damaged are considerable.

### SUMMARY

The following is a brief summary of subject matter described in detail herein. This summary is not intended to be limiting as to the scope of the claims.

The present disclosure provides a front-end anti-collision assembly, which, when a frontal impact accident occurs, can interrupt a transmission path of an impact force, and maintain a flexible connection between a condenser and a vehicle frame, thereby reducing a probability that the condenser is damaged.

The present disclosure further provides a vehicle including the above front-end anti-collision assembly.

A front-end anti-collision assembly according to embodiments of a first aspect of the present disclosure includes an anti-collision cross-member structure, a condenser component, and an adapter bracket; where,
the condenser component includes a condenser, a first buffer structure, and a second buffer structure, the first buffer structure and the second buffer structure are respectively connected to two ends of the condenser in a vertical direction, the first buffer structure is connected to the adapter bracket, and the second buffer structure is configured for connection with a vehicle frame;
the adapter bracket connects the anti-collision cross-member structure and the first buffer structure; and
when the front-end anti-collision assembly is subjected to a frontal impact, the anti-collision cross-member structure pushes the first buffer structure to be separated from the adapter bracket, and the second buffer structure is configured for maintaining a flexible connection with the vehicle frame.

The front-end anti-collision assembly according to the embodiments of the present disclosure has at least the following beneficial effects.

The first buffer structure is movably connected to the adapter bracket. During normal driving, the first buffer structure, the adapter bracket, and the anti-collision cross-member structure are sequentially connected, and the first buffer structure can filter out vibration of the anti-collision cross-member structure. When a frontal impact accident occurs, the anti-collision cross-member structure can push the first buffer structure to move and cause the condenser to rotate as a whole, so that the first buffer structure is separated from the adapter bracket to interrupt the transmission path of the impact force and reduce the probability that the condenser is damaged.

Meanwhile, the second buffer structure maintains a flexible connection with the vehicle frame, which on the one hand can allow the condenser to rotate to be separated from the adapter bracket, and on the other hand can allow the condenser to maintain the connection with the condenser after the condenser is separated from the adapter bracket, thereby preventing the condenser from falling and being damaged.

According to some embodiments of the present disclosure, the anti-collision cross-member structure further includes a positioning member disposed on a side of the anti-collision cross-member structure facing the first buffer structure, the first buffer structure includes a pushing member extending toward the positioning member, and one of the positioning member and the pushing member is inserted into the other one of the positioning member and the pushing member, and the positioning member and the pushing member are slidable relative to each other in an impact direction to guide the anti-collision cross-member structure to abut against the pushing member during a collision.

According to some embodiments of the present disclosure, the first buffer structure further includes a first mounting member connected to the pushing member, a guide groove is defined in the pushing member and extends in the impact direction, and the positioning member is inserted into the guide groove; and an inner diameter of an end of the guide groove close to the positioning member is less than an inner diameter of an end of the guide groove close to the first mounting member.

According to some embodiments of the present disclosure, the front-end anti-collision assembly further includes a first connecting member, where a first mounting hole is defined in the adapter bracket, and the first connecting member passes through the first mounting hole and is connected to the first buffer structure; and
the first mounting hole has an opening at an end of the first mounting hole facing a rear of a vehicle; and when the anti-collision cross-member structure pushes the first buffer structure toward the rear of the vehicle, the first connecting member is disengaged from the first mounting hole to separate the first buffer structure from the adapter bracket.

According to some embodiments of the present disclosure, the anti-collision cross-member structure includes a cross member, an energy absorption box, and a baffle plate, the cross member extends in a width direction of a vehicle, the energy absorption box extends in a length direction of the vehicle, the baffle plate is connected to the cross member and the energy absorption box, the baffle plate includes a first vibration-damping cavity, and at least one first reinforcing rib is disposed in the first vibration-damping cavity; and
along the length direction of the vehicle, a projection area of the energy absorption box onto the baffle plate falls within a range of the baffle plate.

According to some embodiments of the present disclosure, the first vibration-damping cavity includes a front cavity wall and a rear cavity wall in the length direction of the vehicle, and the at least one first reinforcing rib extends in a horizontal direction and is connected to the front cavity wall and the rear cavity wall.

According to some embodiments of the present disclosure, the anti-collision cross-member structure further includes a positioning member connected to the baffle plate, the first buffer structure includes a pushing member extending toward the positioning member, one of the positioning member and the pushing member is inserted into the other one of the positioning member and the pushing member, and the positioning member and the pushing member are slidable relative to each other in an impact direction to guide the anti-collision cross-member structure to abut against the pushing member during a collision.

According to some embodiments of the present disclosure, the second buffer structure includes a second vibration-damping member and a second mounting member configured for connection with the vehicle frame, the second vibration-damping member includes a main body portion, a connecting portion, and an elastic portion, the main body portion is connected to the second mounting member, the connecting portion is configured for connection with the condenser, and the elastic portion is connected to the main body portion and the connecting portion; and the elastic portion is configured for undergoing elastic deformation to provide buffering when the condenser is subjected to an impact.

According to some embodiments of the present disclosure, a mounting cavity is defined in the main body portion, the connecting portion is disposed in the mounting cavity, the connecting portion is spaced apart from a cavity wall of the mounting cavity, and the connecting portion is connected to the cavity wall of the mounting cavity through the elastic portion.

A vehicle according to embodiments of a second aspect of the present disclosure includes:
a vehicle body;
the front-end anti-collision assembly according to any one of the above embodiments, where the front-end anti-collision assembly is connected to the vehicle body and is located at a front end of the vehicle body.

Additional aspects and advantages of the present disclosure will be partly set forth in the following description, and in part become apparent from the following description, or may be learned by practice of the present disclosure.

### BRIEF DESCRIPTION OF DRAWINGS

The present disclosure will be further described below with reference to the accompanying drawings and embodiments, in which:
FIG. 1 is a schematic diagram of a front-end anti-collision assembly according to an embodiment of the present disclosure;
FIG. 2 is a schematic exploded view of a condenser component according to an embodiment of the present disclosure;
FIG. 3 is a schematic structural diagram of a first buffer structure (with a condenser hidden) according to an embodiment of the present disclosure;
FIG. 4 is a schematic diagram of a connection between an adapter bracket and a first buffer structure (with an energy absorption box hidden) according to an embodiment of the present disclosure;
FIG. 5 is a schematic diagram of an anti-collision cross-member structure according to an embodiment of the present disclosure;
FIG. 6 is a schematic diagram of an anti-collision cross-member structure according to an embodiment of the present disclosure from another perspective;
FIG. 7 is a schematic diagram of a baffle plate according to an embodiment of the present disclosure;
FIG. 8 is a schematic exploded view of a rear end of an energy absorption box according to an embodiment of the present disclosure;
FIG. 9 is a schematic diagram of a second buffer structure according to an embodiment of the present disclosure;
FIG. 10 is an exploded view of a second buffer structure according to an embodiment of the present disclosure;
FIG. 11 is a schematic diagram of a second vibration-damping member according to an embodiment of the present disclosure;
FIG. 12 is a schematic diagram of a second mounting member according to an embodiment of the present disclosure;
FIG. 13 is a schematic diagram of a second sleeve according to an embodiment of the present disclosure; and
FIG. 14 is a schematic enlarged view of area A in FIG. 1.

Description of reference signs:
anti-collision cross-member structure 100; cross member 110; energy absorption box 120; second reinforcing rib 121; first connecting hole 122; first sleeve 123; first opening 124; baffle plate 130; first reinforcing rib 131; positioning member 132; support member 140; first adapter 150; second adapter 160; condenser component 200; condenser 210; first mounting bracket 211; second mounting bracket 212; first buffer structure 220; first mounting member 221; first vibration-damping member 222; elastic arm 2221; elastic protrusion 2222; pushing member 223; guide groove 2231;
second buffer structure 230; second mounting member 231; accommodating cavity 2311; injection molding groove 2312; injection molding hole 2313; elastic snap 2314; second vibration-damping member 232; main body portion 2321; connecting segment 23211; connecting portion 2322; through hole 23221; elastic portion 2323; first injection molding portion 2324; second injection molding portion 2325; vibration-damping groove 2326; second sleeve 233; second connecting hole 2331; groove 2332;
adapter bracket 300; first mounting hole 310.

### DETAILED DESCRIPTION

Embodiments of the present disclosure are described in detail below, and examples of the embodiments are shown in the accompanying drawings, in which the same or similar reference numerals indicate the same or similar elements or elements having the same or similar functions throughout. The embodiments described below with reference to the accompanying drawings are illustrative and are only used for explaining the present disclosure, and should not be construed as limiting the present disclosure.

In the description of the present disclosure, it should be understood that the orientation or positional relationship related to the orientation description, such as the orientation or positional relationship indicated by upper, lower, front, rear, left, right, etc., is based on the orientation or positional relationship shown in the drawings, and is only for the convenience of describing the present disclosure and simplifying the description, rather than indicating or implying that the device or element referred to must have a specific orientation, be constructed and operated in a specific orientation, and therefore cannot be understood as a limitation on the present disclosure.

In the description of the present disclosure, "several" means one or more, "a plurality of" means two or more, "greater than", "less than", "more than/exceeding", and the like, are understood as excluding the given number, and "not less than/at least", "not more than/at most", "within", and the like, are understood as including the given number. The terms, such as "first", "second", and the like, are only for the purpose of distinguishing technical features, and cannot be understood as indicating or implying relative importance or implicitly indicating the number of indicated technical features or implicitly indicating the order of the indicated technical features.

In the description of the present disclosure, unless otherwise clearly defined, terms such as "arrange/dispose/provide", "install/mount", "connect", and the like, should be understood in a broad sense, and those skilled in the art can reasonably determine the specific meanings of the above terms in the present disclosure in combination with the specific contents of the technical solutions.

In the description of the present disclosure, the description with reference to the terms "one embodiment", "some embodiments", "illustrative embodiment", "example", "specific example", "some examples", or the like, means that the specific features, structures, materials, or characteristics described in connection with the embodiment or example are included in at least one embodiment or example of the present disclosure. In this specification, schematic expressions of the above terms do not necessarily refer to the same embodiment or example. Moreover, the described specific features, structures, materials, or characteristics may be combined in a suitable manner in any one or more of the embodiments or examples.

With the rapid development of the automobile industry, the vehicle population is on the rise, and the probability of collision accidents is also increasing. Among these, the probability of low-speed collisions on urban roads is particularly high. A front-end anti-collision structure of a passenger vehicle is a primary protective component in a low-speed collision of the vehicle, and usually can protect other high-cost components at a front end, such as a front longitudinal rail, a front subframe, and the like.

In many existing vehicle models, a case where a cooling and heat-dissipation system is damaged may occur in a low-speed collision accident, and thus, the cooling and heat-dissipation system needs to be replaced during repair. Because the cooling and heat-dissipation system is relatively expensive, the repair costs incurred when it is damaged are considerable.

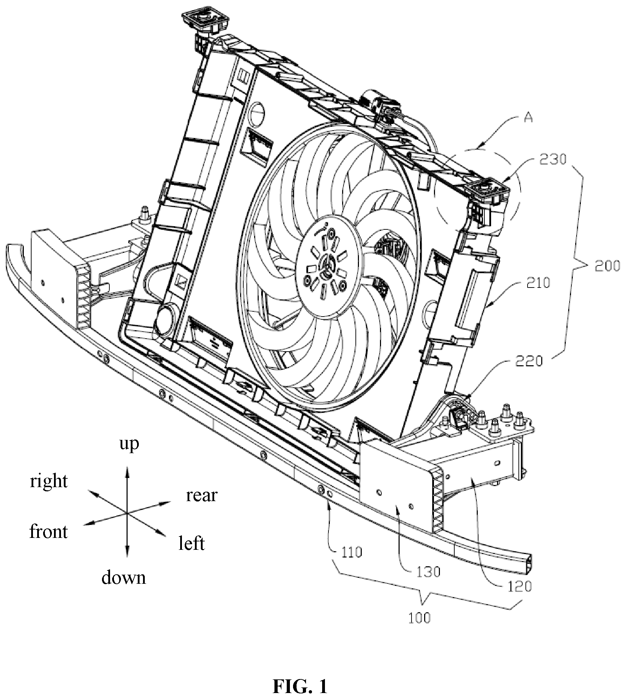

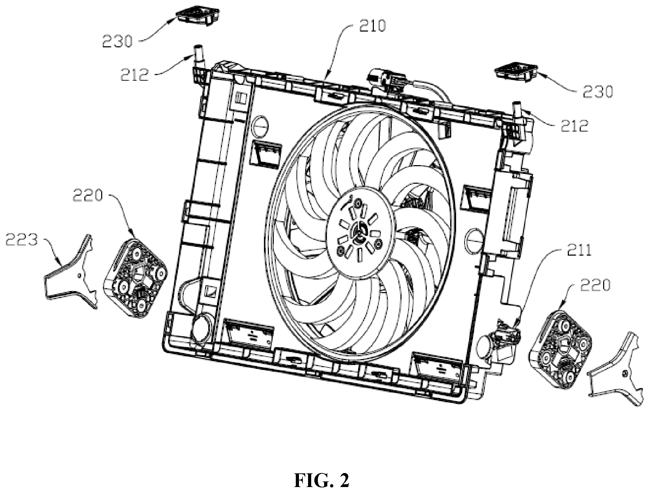

In view of the above, embodiments of a first aspect of the present disclosure provide a front-end anti-collision assembly, which includes an anti-collision cross-member structure 100, a condenser component 200, and an adapter bracket 300. As shown in FIG. 1, the anti-collision cross-member structure 100 is arranged around the condenser component 200, and the anti-collision cross-member structure 100 is impacted before the condenser component 200 when a collision occurs. The condenser component 200 includes a condenser 210, a first buffer structure 220, and a second buffer structure 230. As shown in FIG. 2, an upper end and a lower end of the condenser 210 are respectively provided with a first mounting bracket 211 and a second mounting bracket 212, the first mounting bracket 211 is configured to be connected to the first buffer structure, and the second mounting bracket 212 is configured to be connected to the second buffer structure.

In an embodiment shown in FIG. 2, two first mounting brackets 211 are provided on the lower end of the condenser 210, and the two first mounting brackets 211 are respectively located on left and right sides of the condenser 210; and two second mounting brackets 212 are provided on the upper end of the condenser 210, and the two second mounting brackets 212 are respectively located on left and right sides of the condenser 210. In some other embodiments, one, three, or other numbers of first mounting brackets 211 may be provided at the lower end of the condenser 210, and the same is applied to the number of second mounting brackets 212. In addition, the arrangement positions of the first mounting bracket 211 and the second mounting bracket 212 may also be changed. For example, the first mounting bracket 211 is provided on the upper end of the condenser 210, and the second mounting bracket 212 is provided on the lower end of the condenser 210. It can be understood that the arrangement position and number of the buffer structure change with the arrangement position and number of the mounting bracket.

The first buffer structure 220 is configured to connect the condenser 210 and the adapter bracket 300, the adapter bracket 300 is configured to connect the anti-collision cross-member structure 100 and the first buffer structure 220, and the second buffer structure 230 is configured to connect the condenser 210 and a vehicle frame (not shown in the drawings). In the embodiment shown in FIG. 1, the upper end of the condenser 210 is suspended on the vehicle frame via the second buffer structure 230, and the lower end of the condenser 210 is connected to the anti-collision cross-member structure 100 via the first buffer structure 220.

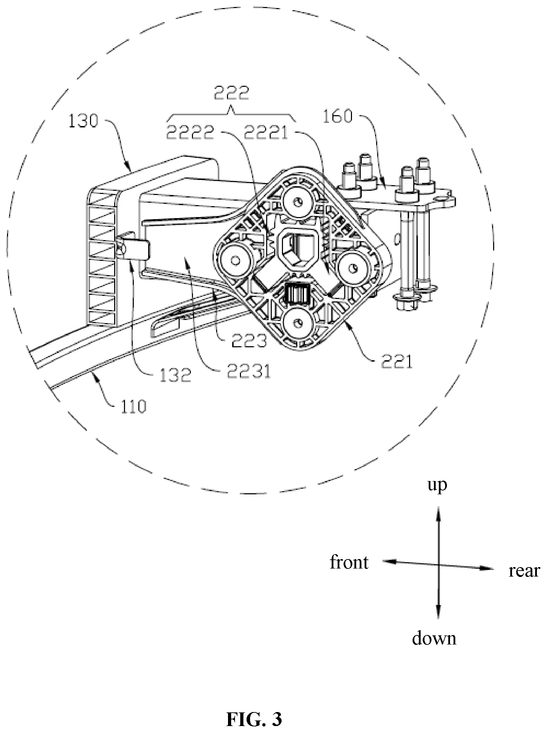

Both the first buffer structure 220 and the second buffer structure 230 have a buffering and vibration-damping function. Taking the first buffer structure 220 shown in FIG. 3 as an example, the first buffer structure 220 includes a first mounting member 221 and a first vibration-damping member 222. The first mounting member 221 is configured to be connected to the adapter bracket 300, and the first vibration-damping member 222 is configured to be connected to the first mounting bracket 211. The first mounting member 221 has an accommodating cavity, and the first vibration-damping member 222 is disposed in the accommodating cavity and is connected to the first mounting member 221 through two elastic arms 2221. An elastic protrusion 2222 is further disposed on an outer periphery of the first vibration-damping member 222, and the elastic protrusion 2222 is configured to abut against a cavity wall of the accommodating cavity, so that minor vibration can be filtered out between the first vibration-damping member 222 and the first mounting member 221 through elastic deformation of the elastic arm 2221 and the elastic protrusion 2222.

It should be noted that the first buffer structure 220 is movably connected to the adapter bracket 300. During normal driving, the first buffer structure 220, the adapter bracket 300, and the anti-collision cross-member structure 100 are sequentially connected, and the first buffer structure 220 can filter out vibration of the anti-collision cross-member structure 100. When a front impact accident occurs, the anti-collision cross-member structure 100 can push the first buffer structure 220 to move and cause the condenser 210 to rotate as a whole, so that the first buffer structure 220 is separated from the adapter bracket 300 to interrupt the transmission path of the impact force and reduce the probability that the condenser 210 is damaged.

In addition, the second buffer structure 230 maintains a flexible connection with the vehicle frame, which on the one hand can allow the condenser 210 to rotate to be separated from the adapter bracket 300, and on the other hand can allow the condenser 210 to maintain the connection with the condenser 210 after the condenser 210 is separated from the adapter bracket 300, thereby preventing the condenser 210 from falling and being damaged.

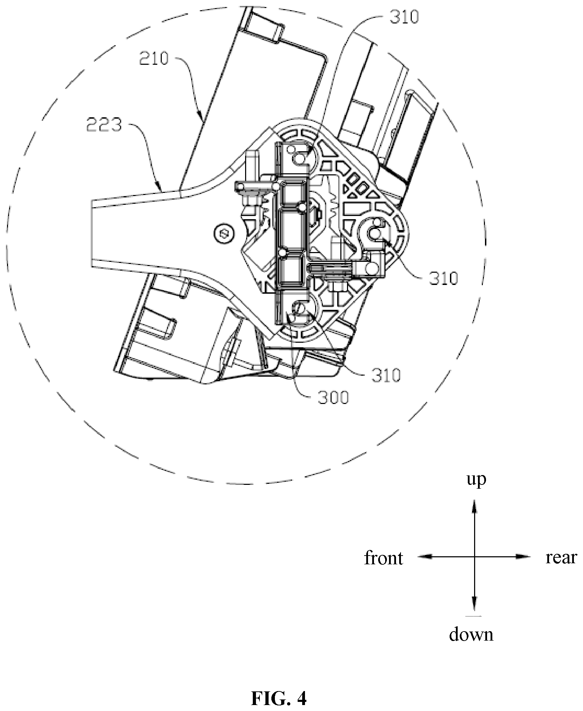

In some embodiments, structural strength of a main body portion (e.g., fan, filter screen, etc.) of the condenser 210 is relatively low. If the anti-collision cross-member structure 100 directly abuts against the main body portion of the condenser 210 during the collision, it is prone to cause the condenser 210 to be damaged by impact. To this end, as shown in FIG. 3 and FIG. 4, a pushing member 223 is connected to the first buffer structure 220, and the pushing member 223 is disposed corresponding to the anti-collision cross-member structure 100, and is configured to abut against the anti-collision cross-member structure 100 and push the condenser 210 to move backward during the collision.

The first buffer structure 220 includes the first mounting member 221 made of a hard material with relatively high structural strength. The pushing member 223 is connected to the first mounting member 221 and extends forward to shorten a gap between the pushing member 223 and the anti-collision cross-member structure 100. In addition, if the anti-collision cross-member structure 100 has a vertical offset during the impact, it is prone to cause that the anti-collision cross-member structure 100 fails to accurately abut against the pushing member 223, thereby bring a risk of buffer failure. Therefore, as shown in FIG. 3, the anti-collision cross-member structure 100 further includes a positioning member 132. The positioning member 132 is disposed on a side of the anti-collision cross-member structure 100 facing the first buffer structure 220, is disposed corresponding to the pushing member 223, and extends toward the pushing member 223.

One of the positioning member 132 and the pushing member 223 is inserted into the other. In the embodiment shown in FIG. 3, a side of the pushing member 223 is provided with a guide groove 2231 extending in the impact direction, an end of the guide groove 2231 facing the anti-collision cross-member structure 100 is provided with an opening, and the positioning member 132 is inserted into the guide groove 2231 through the opening. During an impact, the positioning member 132 can slide relative to the pushing member 223 in the impact direction, and groove walls of the guide groove 2231 in the vertical direction limit a displacement range of the positioning member 132 in the vertical direction, so that the anti-collision cross-member structure 100 is guided by the positioning member 132 to abut against the pushing member 223, thereby pushing the first buffer structure 220 to be separated from the adapter bracket 300. In some other embodiments, the positioning member 132 is provided with the guide groove 2231, and the pushing member 223 is inserted into the positioning member 132.

Further, although there is an insertion fit relationship between the positioning member 132 and the pushing member 223, there is no abutment relationship therebetween. As shown in FIG. 3, the positioning member 132 is supported by the anti-collision cross-member structure 100, and is suspended in the pushing member 223 with a certain gap from the groove walls of the guide groove 2231 of the pushing member 223, so that the positioning member 132 has a certain vertical movement freedom within the guide groove 2231. Since the anti-collision cross-member structure 100 is connected to the vehicle body and is subjected to vibrations due to the influence of road conditions during driving, providing the gap between the positioning member 132 and the pushing member 223 can prevent the vibrations of the anti-collision cross-member structure 100 from being transmitted to the condenser 210 through the positioning member 132 and the pushing member 223.

Further, since the end of the pushing member 223 connected to the first mounting member 221 needs to maintain a stable connection, as shown in FIG. 3, a rear end of the pushing member 223 abuts against the outer peripheral wall of the first mounting member 221, and as shown in FIG. 4, the pushing member 223 further includes an abutting portion extending to a side surface of the first mounting member 221 and abutting against a protrusion on the side surface thereof. In addition, as shown in FIG. 4, the pushing member 223 and the first mounting member 221 are connected as an integral structure by screws.

To achieve a lightweight design of the pushing member 223, the pushing member 223 has a shape with a small front end and a large rear end as shown in FIG. 3 and FIG. 4. Correspondingly, an inner diameter of an end of the guide groove 2231 close to the positioning member 132 is less than an inner diameter of an end of the guide groove 2231 close to the first mounting member 221, so that after the positioning member 132 is inserted into the guide groove 2231, the upward and downward shaking range of the positioning member 132 is limited.

It should be noted that, to enable the anti-collision cross-member structure 100 to drive the pushing member 223 to move so as to separate the first buffer structure 220 from the adapter bracket 300, the adapter bracket 300 is provided with a mounting hole having an opening. Specifically, as shown in FIG. 4, the front-end anti-collision assembly further includes a first connecting member, which may be a bolt, a screw, or the like. The adapter bracket 300 is provided with a first mounting hole 310, and the first connecting member passes through the first mounting hole 310 and is connected to the first buffer structure 220, thereby connecting the adapter bracket 300 and the condenser 210 as an integral structure.

It should be noted that the first mounting hole 310 is a single-side opening structure, and has an opening at an end facing the rear of the vehicle, so that the first connecting member can be disengaged from the first mounting hole 310 through the opening. When the anti-collision cross-member structure 100 pushes the first buffer structure 220 toward the rear of the vehicle, the first connecting member moves backward together with the first buffer structure 220, and the adapter bracket 300 connected to an energy absorption box 120 does not move. Thus, the first connecting member moves relative to the adapter bracket 300 and is disengaged from the first mounting hole 310, so that when the impact force is transmitted to the energy absorption box 120, the force transmission path among the energy absorption box 120, the adapter bracket 300, and the condenser 210 is interrupted, and thus the impact force does not affect the condenser 210.

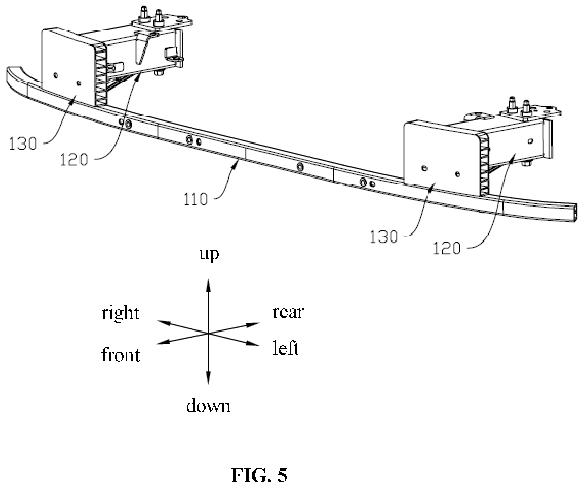

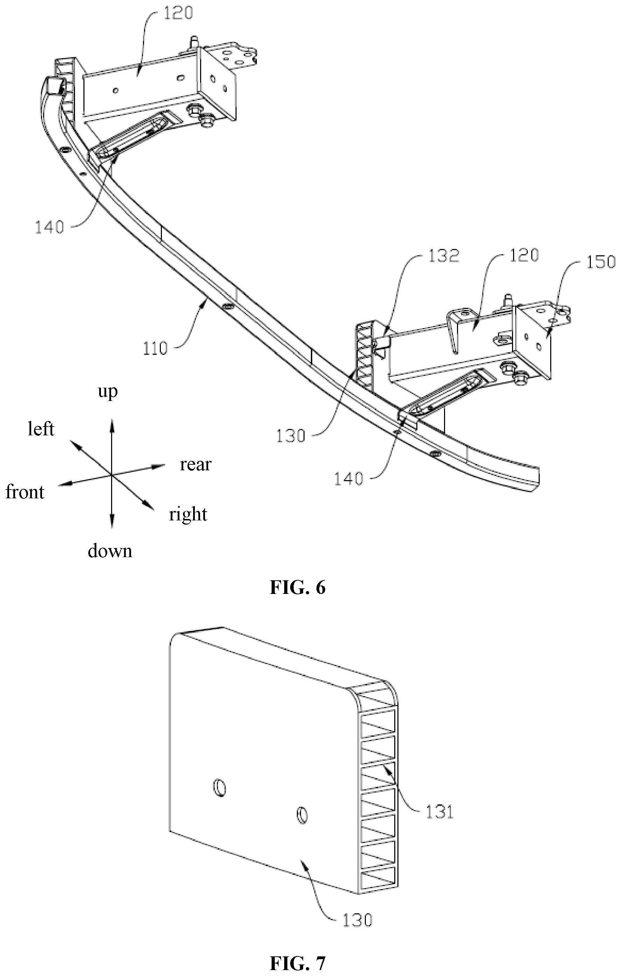

In some embodiments, the anti-collision cross-member structure 100 includes a cross member 110, the energy absorption box 120, and a baffle plate 130. The cross member 110, the energy absorption box 120, and the baffle plate 130 may all be formed by extrusion of metal materials, or may be assembled by welding or other means. As shown in FIG. 5 and FIG. 6, the cross member 110 extends along a width direction of the vehicle, the cross member 110 is generally an elongated member with a certain curvature, and has a hollow interior; according to the strength design requirements of the cross member 110, structures such as reinforcing ribs can be disposed in the cavity inside the cross member 110 to achieve better structural strength while reducing weight. The energy absorption box 120 is a thin-walled metal member. When the vehicle is subjected to a frontal impact, after the energy absorption box 120 is subjected to a longitudinal impact force along a length direction of the vehicle, it undergoes progressive collapsing deformation from front to rear during the transmission of the longitudinal impact force, thereby absorbing the impact energy to reduce the influence of the collision on the condenser 210 and the subframe.

It should be noted that, referring to FIG. 5, since a thickness of the energy absorption box 120 in the vertical direction is greater than that of the cross member 110 in the vertical direction, if the cross member 110 is directly connected to the energy absorption box 120, the energy absorption box 120 may be torn by the cross member 110 due to stress concentration at the connection between the energy absorption box 120 and the cross member 110 during the collision.

To this end, in this embodiment, the transition is achieved through the baffle plate 130. Along the length direction of the vehicle, a projection area of the energy absorption box 120 onto the baffle plate 130 falls within the range of the baffle plate 130. The baffle plate 130 is connected to the cross member 110 and the energy absorption box 120, so that the cross member 110, the baffle plate 130 and the energy absorption box 120 are connected as an integral structure. The energy absorption box 120 extends along the length direction of the vehicle, a front end of the energy absorption box 120 is connected to the baffle plate 130 by welding, bolting, or the like, and a rear end of the energy absorption box 120 is connected to the subframe by detachable connection such as bolting, so as to facilitate replacement of front-end fragile parts such as the cross member 110 and the energy absorption box 120 after an accident.

When a collision accident occurs, the impact force received by the cross member 110 is sequentially transmitted to the baffle plate 130 and the energy absorption box 120. Since a size of the baffle plate 130 in the width direction of the vehicle and a size of the baffle plate 130 in the vertical direction are both greater than those of the energy absorption box 120 respectively, the impact force received by the baffle plate 130 can be uniformly transmitted to the energy absorption box 120, avoiding the situation of stress concentration and tearing at the connection between the energy absorption box 120 and the baffle plate 130, which is beneficial for improving the stability of the crushing of the energy absorption box 120.

To prevent the energy absorption box 120 from penetrating the baffle plate 130 during an impact onto the baffle plate 130, the baffle plate 130 has a plate-like structure with a certain thickness and strength. Specifically, as shown in FIG. 7, the baffle plate 130 has a hollow structure, and a first vibration-damping cavity is defined inside the baffle plate 130, to implement lightweight of the baffle plate 130. To enable the baffle plate 130 to have better strength to transmit the impact force, at least one first reinforcing rib 131 is provided in the first vibration-damping cavity. In an embodiment shown in FIG. 7, a plurality of first reinforcing ribs 131 are arranged in the first vibration-damping cavity, and each of the first reinforcing ribs 131 is horizontally disposed and is connected to a front cavity wall and a rear cavity wall of the first vibration-damping cavity. In some other embodiments, the first reinforcing rib 131 may also be vertically disposed, and is connected to the front cavity wall and the rear cavity wall of the first vibration-damping cavity. Alternatively, the first reinforcing rib 131 may be wavy, bent, circular, or the like, is disposed in the first vibration-damping cavity, and serves to support and reinforce the baffle plate 130.

In embodiments shown in FIG. 1, FIG. 5 and FIG. 6, the baffle plates 130 are respectively provided at two ends of the cross member 110, and each of the two ends of the cross member 110 is connected to one energy absorption box 120 through the baffle plate 130. The two energy absorption boxes 120, the two baffle plates 130, and the one cross member 110 are arranged around the condenser 210. The cross member 110 is located at the front end of the condenser 210, and the two energy absorption boxes 120 are respectively located at two sides of the condenser 210. In other embodiments, multiple sets of baffle plates 130 and energy absorption boxes 120 may be provided, and uniformly distributed on two sides of the condenser 210, to enhance the energy absorption effect during the impact by increasing the number of the energy absorption boxes 120.

It should be noted that, for the convenience of subsequent description, two walls of the cross member 110 arranged opposite to each other along the vertical direction are respectively referred to as a bottom wall and a top wall, and two walls of the cross member 110 arranged opposite to each other along the length direction of the vehicle are respectively referred to as a front wall and a rear wall. The cross member 110 has two end surfaces along the length direction of the vehicle, and the relative arrangement of the cross member 110, the energy absorption box 120, and the baffle plate 130 may be any one of the following configurations.
1. The baffle plate 130 is connected to the top wall of the cross member 110, or the baffle plate 130 is connected to the bottom wall of the cross member 110. In embodiments shown in FIG. 5 and FIG. 6, a bottom wall surface of the baffle plate 130 is connected to the top wall of the cross member 110, and a front wall surface of the baffle plate 130 is flush with the front wall of the cross member 110. If the baffle plate 130 collides with a pedestrian's leg, the larger contact area results in a more uniform impact load distribution, which can reduce injury to the pedestrian's leg. The same applies when the baffle plate 130 is connected to the bottom wall of the cross member 110.
2. The baffle plate 130 is connected to the front wall of the cross member 110, or the baffle plate 130 is connected to the rear wall of the cross member 110. Taking the front wall surface of the baffle plate 130 being connected to the rear wall of the cross member 110 as an example, in this embodiment, the impact borne by the cross member 110 can be directly transmitted to the energy absorption box 120 along the length direction of the vehicle without generating problems such as bending moment, thereby reducing the risk of bending of the energy absorption box 120, and improving the crushing effect of the energy absorption box 120.
3. The baffle plate 130 is connected to an end surface of the cross member 110. In this implementation, a side wall of the baffle plate 130 and the end surface of the cross member 110 are connected as an integral structure by welding or other connection means, and the baffle plate 130 may be regarded as a part of the cross member 110, and also plays a protective role.

In some embodiments, the anti-collision cross-member structure 100 further includes a support member 140, and two ends of the support member 140 are respectively connected to the energy absorption box 120 and the cross member 110 to improve the structural stability among the energy absorption box 120, the baffle plate 130, and the cross member 110. Further, in the embodiment shown in FIG. 6, the baffle plate 130 is connected to the top wall of the cross member 110, one end of the support member 140 is connected to the bottom wall of the energy absorption box 120, and the other end of the support member 140 is connected to the cross member 110, so as to form a triangular structure among the cross member 110, the baffle plate 130, and the energy absorption box 120. It can be understood that the triangular structure has good stability to avoid failure caused by bending of the cross member 110 when impacted. Similarly, when the top wall surface of the baffle plate 130 is connected to the bottom wall of the cross member 110, the support member 140 is arranged on the top wall of the energy absorption box 120 and connected to the cross member 110, thereby forming a triangular structure among the cross member 110, the baffle plate 130, and the energy absorption box 120.

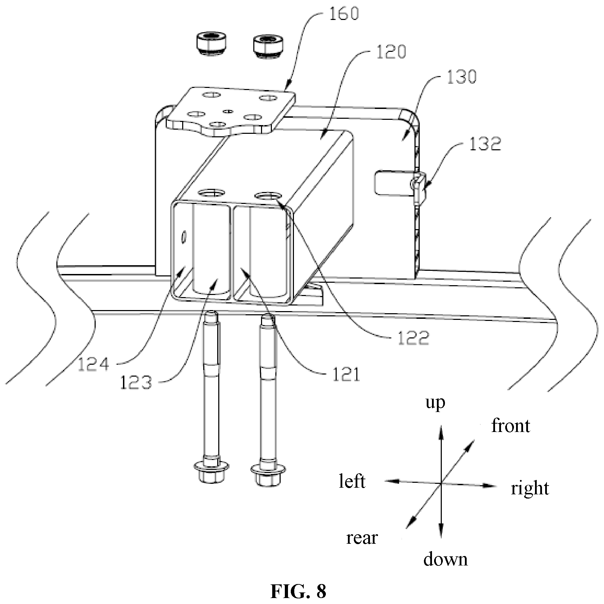

In some embodiments, as shown in FIG. 8, the energy absorption box 120 also has a hollow structure. A second vibration-damping cavity is defined inside the energy absorption box 120, and at least one second reinforcing rib 121 is disposed in the second vibration-damping cavity. The second reinforcing rib 121 may be arranged vertically to connect a top cavity wall and a bottom cavity wall of the second vibration-damping cavity, or may be arranged horizontally to connect a left cavity wall and a right cavity wall of the second vibration-damping cavity. It should be noted that the second reinforcing rib 121 divides the second vibration-damping cavity into a plurality of chambers extending along the length direction of the vehicle to achieve a better energy absorption effect.

In some embodiments, as shown in FIG. 8, first connecting holes 122 are correspondingly defined in two opposite wall surfaces of the energy absorption box 120. It should be noted that the first connecting holes 122 may be defined in the left and right wall surfaces of the energy absorption box 120, or may be defined in the top and bottom wall surfaces of the energy absorption box 120. In the embodiment shown in FIG. 8, two first connecting holes 122 are defined in the top wall surface of the energy absorption box, and correspondingly, two first connecting holes 122 are also defined in the bottom wall surface of the energy absorption box. Each of the first connecting holes 122 is in communication with the second vibration-damping cavity, and the first connecting holes 122 on the two opposite wall surfaces are coaxially arranged. The first connecting hole 122 is configured for connection with the subframe. As shown in FIG. 8, the anti-collision cross-member structure 100 is further connected with a second adapter 160. After aligning a connecting hole on the second adapter 160 with the first connecting hole 122, a bolt is passed through the second adapter 160 and the energy absorption box 120, and then a nut is tightened to achieve fixation.

To avoid tearing of the energy absorption box 120 caused by stress concentration between the hole wall of the first connecting hole 122 and the bolt during the collision, a first sleeve 123 is further provided in the second vibration-damping cavity, two ends of the first sleeve 123 are respectively connected to the cavity walls of the second vibration-damping cavity, a hollow pipe is defined inside the first sleeve 123, and two ends of the hollow pipe are respectively in communication with the first connecting holes 122. Therefore, the bolt can pass through the first connecting holes 122 and the first sleeve 123, and the arrangement of the first sleeve 123 reinforces the structural strength around the first connecting holes 122 and improves the crushing stability of the rear end of the energy absorption box 120.

Further, since the energy absorption box 120 is formed by extrusion, both ends of the energy absorption box 120 in the length direction are openings. For the convenience of subsequent description, as shown in FIG. 8, the opening located at the rear end of the energy absorption box 120 and in communication with the second vibration-damping cavity is referred to as a first opening 124. The anti-collision cross-member structure 100 further includes a first adapter 150. As shown in FIG. 6, the first adapter 150 is connected to the rear end of the energy absorption box 120 and closes the first opening 124. The first adapter 150 is configured for connection with the subframe. It should be noted that, since the energy absorption box 120 is of a thin-walled structure, if the energy absorption box 120 is directly connected to the subframe, the energy absorption box 120 may intrude into the subframe during the collapse process of the energy absorption box 120. Therefore, providing the plate-like first adapter 150 between the subframe and the energy absorption box 120 facilitates the crushing of the energy absorption box 120 onto the first adapter 150, avoiding influence on the subframe.

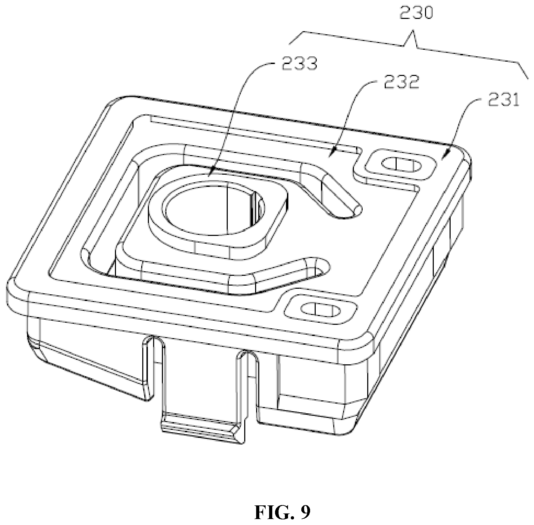

In some embodiments, as shown in FIG. 9 to FIG. 12, the second buffer structure 230 includes a second mounting member 231 and a second vibration-damping member 232. The second mounting member 231 is configured for connection with the vehicle frame (not shown in the drawings), and the vehicle frame may be a main vehicle frame, a headlight bracket, or the like. The second mounting member 231 is made of metal material or hard plastic, has good strength, and can serve as a mounting base of the second vibration-damping member 232.

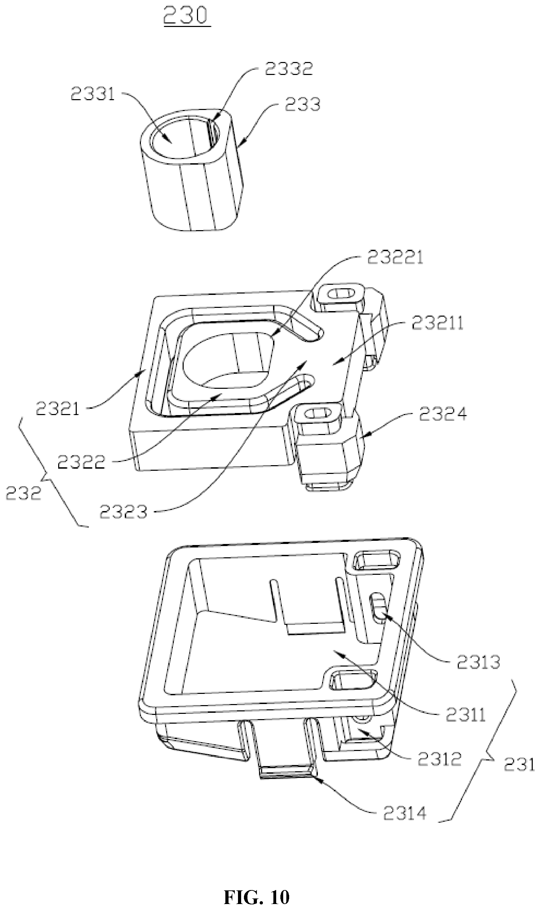

The second vibration-damping member 232 and the second mounting member 231 are connected as an integral structure by any one of gluing, injection molding, snap-fitting, or the like. The second vibration-damping member 232 is made of a material with good toughness, such as rubber. Specifically, the second vibration-damping member 232 includes a main body portion 2321, a connecting portion 2322, and an elastic portion 2323. The main body portion 2321 is connected to the second mounting member 231, as shown in FIGS. 9 and 10, and the main body portion 2321 is embedded in the second mounting member 231 by injection molding. The connecting portion 2322 is configured for connection with the condenser 210. As shown in FIG. 1, FIG. 2, and FIG. 14, the second mounting bracket 212 is provided on the upper end of the condenser 210, and the connecting portion 2322 can be sleeved on the second mounting bracket 212, so that the second vibration-damping member 232 is connected to the condenser 210. As shown in FIG. 9 to FIG. 11, the elastic portion 2323 is connected to the main body portion 2321 and the connecting portion 2322, and the elastic portion 2323 can undergo a certain elastic deformation. When the condenser 210 is impacted, the elastic portion 2323 of the second vibration-damping member 232 undergoes elastic deformation to absorb and disperse impact energy, thereby reducing damage to the condenser 210. This design can effectively improve the service life and stability of the condenser 210.

In an embodiment of the present disclosure, the second buffer structure 230 is mounted on the second mounting bracket 212 of the condenser 210, and then the second buffer structure 230 is connected to the vehicle frame. In some other embodiments, this assembly order may be changed according to a specific installation structure. After the condenser 210 and the vehicle frame are connected by using the second buffer structure 230, a flexible connection relationship is formed between the condenser 210 and the vehicle frame, and the condenser 210 can swing or move to some extent relative to the vehicle frame, thereby playing a role of load distribution and vibration-damping during a driving process or a collision process of the vehicle.

For example, when the vehicle passes through a speed bump, a pit, or other rough road surfaces, the vehicle frame vibrates. Some vibrations can be absorbed through elastic deformation of the elastic portion 2323, to reduce influence on the condenser 210 and avoid damage to the condenser 210 during vibration. Alternatively, when the vehicle is subjected to a frontal impact and thus the condenser 210 is subjected to an impact, the elastic portion 2323 can undergo elastic deformation to allow the condenser 210 to rotate or swing to a certain extent, thereby providing functions of buffering and absorbing energy, avoiding an impact point, and the like, to protect the condenser 210 and the vehicle frame.

Referring to the front-end anti-collision assembly shown in FIG. 1, the upper end of the condenser 210 is connected to the vehicle frame through the second buffer structure 230, and the lower end of the condenser 210 is connected to the anti-collision cross-member structure 100. When a frontal collision occurs, the cross member 110 pushes the lower end of the condenser 210 to move backward and separate from the anti-collision cross-member structure 100 for buffering. It can be understood that when the upper end of the condenser 210 is rigidly connected to the vehicle frame, the mounting orientation of the condenser 210 should be fixed, and the lower end of the condenser 210 moves backward to cause damage to the condenser 210 and/or the vehicle frame. In the embodiments of the present disclosure, by realizing the flexible connection between the condenser 210 and the vehicle frame through the second buffer structure 230, damage to the condenser 210 or the vehicle frame during the rearward movement of the condenser 210 for buffering is avoided.

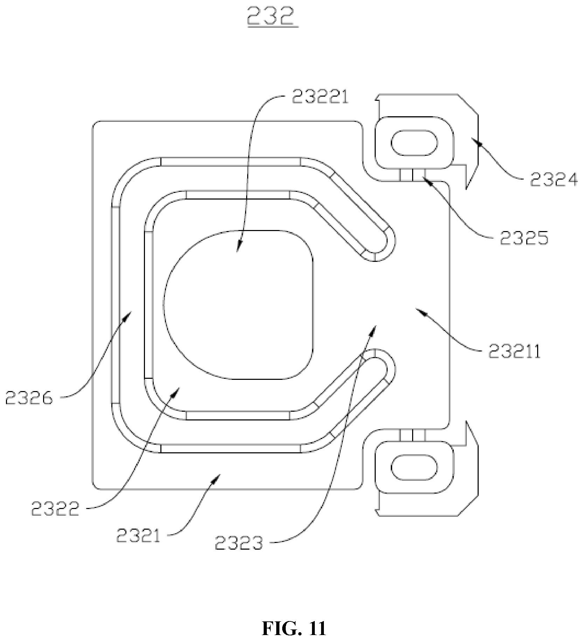

In some embodiments, the second vibration-damping member 232 is an integrally formed structure. As shown in FIG. 10 and FIG. 11, the main body portion 2321, the connecting portion 2322, and the elastic portion 2323 are all integrally injection molded. A through hole is formed in a middle portion of the second vibration-damping member 232 to define a mounting cavity, the connecting portion 2322 is disposed in the mounting cavity, a gap needs to be maintained between the connecting portion 2322 and a cavity wall of the mounting cavity, and the connecting portion 2322 is connected to the cavity wall of the mounting cavity through the elastic portion 2323. Therefore, as shown in FIG. 11, an annular vibration-damping groove 2326 is defined between the connecting portion 2322 and the main body portion 2321. The annular vibration-damping groove 2326 is not a closed ring, two ends of the vibration-damping groove 2326 are spaced apart from each other, and the elastic portion 2323 is defined between the main body portion 2321 and the connecting portion 2322.

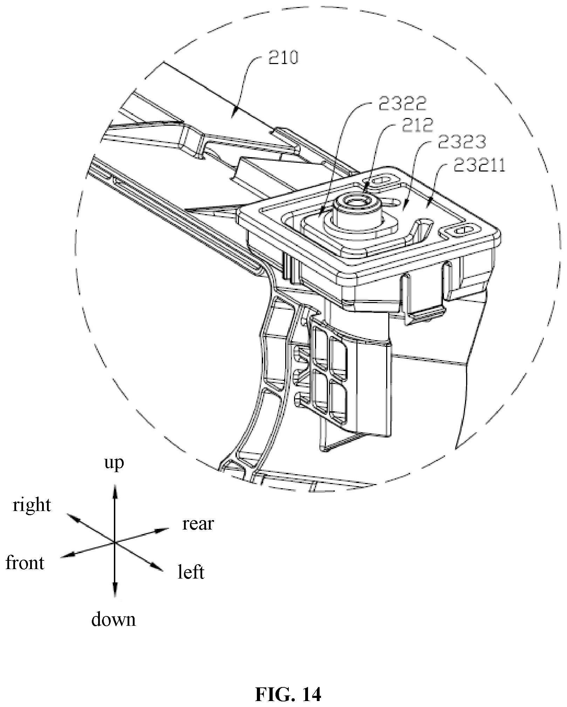

Since there is a gap between the connecting portion 2322 and the main body portion 2321 and the connecting portion 2322 is flexibly connected to the main body portion 2321, the connecting portion 2322 can shake or swing in the mounting cavity, for example, shake in the left-right direction as shown in FIG. 14, or swing in the up-down direction as shown in FIG. 14.

Since the second vibration-damping member 232 is entirely made of an elastic material such as rubber, to concentrate the elastic deformation on the elastic portion 2323 for better stability of the elastic deformation of the second vibration-damping member 232, the width of the elastic portion 2323 is less than that of the connecting portion 2322.

Based on the foregoing, the connecting portion 2322 is made of a material with good toughness, such as rubber, and can undergo certain elastic deformation under force. If the connecting portion 2322 is directly connected to the mounting bracket of the condenser 210, there may be a risk that the condenser 210 falls off due to the loose or insecure connection. Therefore, in some embodiments, as shown in FIG. 9 and FIG. 10, a through hole 23221 is defined in the connecting portion 2322, the second buffer structure 230 further includes a second sleeve 233, and the second sleeve 233 passes through the through hole 23221 and is connected to the connecting portion 2322 by interference fit, bonding, or the like. The second sleeve 233 is configured for connection with the condenser 210, so that the connecting portion 2322 is connected to the condenser 210 through the second sleeve 233. It should be noted that the material strength of the second sleeve 233 is greater than that of the connecting portion 2322, and the second sleeve 233 is not prone to elastic deformation under force, and can maintain a stable connection with the condenser 210.

It should be noted that during the assembly process of the condenser 210 and the second buffer structure 230, the relative connection orientations of the elastic portion 2323 and the connecting portion 2322 have a corresponding relationship with the relative arrangement orientation of the condenser 210. For example, in embodiments shown in FIG. 11 and FIG. 14, for the convenience of subsequent description, a part of the main body portion 2321 for connecting with the elastic portion 2323 is referred to as a connecting segment 23211, and the connecting portion 2322, the elastic portion 2323, and the connecting segment 23211 are sequentially arranged in a direction from front to rear. The upper end of the condenser 210 is provided with a mounting bracket penetrating through the connecting portion 2322. When the condenser 210 is impacted, the lower end of the condenser 210 moves relative to the upper end of the condenser 210, causing the entire condenser 210 to rotate. The elastic portion 2323 is driven to bend downward and deform, so that the connecting portion 2322 is tilted downward. Similarly, the connecting portion 2322, the elastic portion 2323, and the connecting portion may also be sequentially arranged in a direction from rear to front, so that when the condenser 210 is impacted, the elastic portion 2323 is driven to bend upward and deform, and the connecting portion 2322 is tilted upward.

Referring to an embodiment shown in FIG. 14, if the connecting portion 2322, the elastic portion 2323, and the connecting segment 23211 are arranged in a direction from left to right or from right to left, when the condenser 210 is impacted, the elastic portion 2323 may undergo torsional deformation. On the one hand, the threshold of the torsional deformation is relatively high, and the second buffer structure 230 cannot disperse the load in time through deformation. On the other hand, the connection position between the elastic portion 2323 and the connecting segment 23211 is prone to tear due to the stress concentration, resulting in a shorter service life of the elastic portion 2323.

Furthermore, to ensure that the second buffer structure 230 is connected to the condenser 210 in a preset orientation, the through hole 23221 in the connecting portion 2322 is shaped as an irregular shape, and the shape of the second sleeve 233 corresponds to that of the through hole 23221. For example, in the embodiments shown in FIG. 10 and FIG. 11, an end of the through hole 23221 facing the connecting portion 2322 is formed as a straight line segment, and an end of the through hole 23221 away from the connecting portion 2322 is formed as an arc line segment. Thus, when the second sleeve 233 is also correspondingly configured to have the shape with a straight line segment and an arc line segment, and the second sleeve 233 is inserted into the through hole 23221, the straight line segment of the second sleeve 233 needs to correspond to the straight line segment of the through hole 23221, and the arc line segment of the second sleeve 233 needs to correspond to the arc line segment of the through hole 23221, thereby ensuring that the second sleeve 233 is connected to the connecting portion 2322 in the preset orientation.

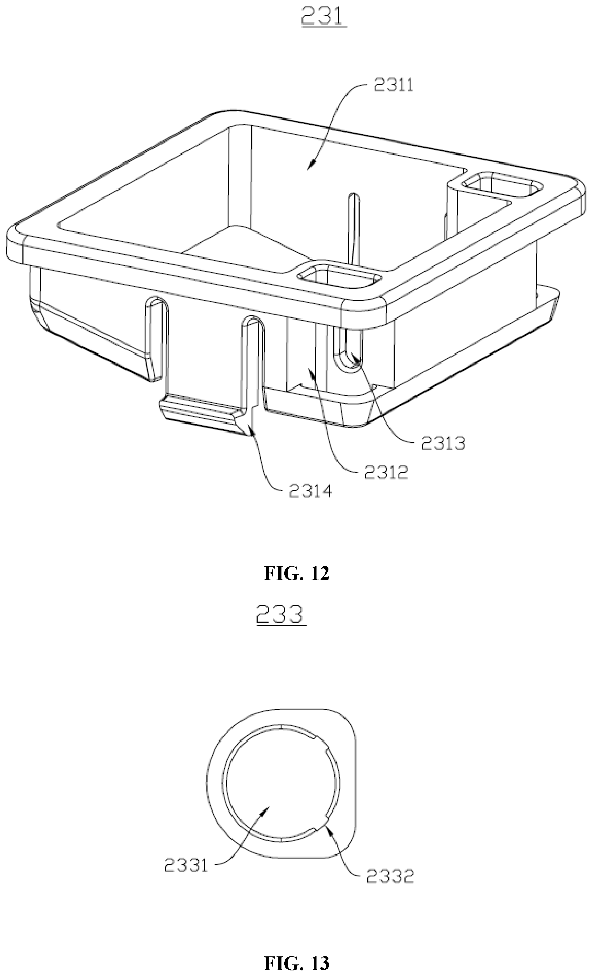

In addition, as shown in FIG. 13, a second connecting hole 2331 for connecting with the condenser 210 is defined in the second sleeve 233, and a hole wall of the second connecting hole 2331 is provided with at least one groove 2332 extending along an axial direction of the second connecting hole 2331. Correspondingly, a protrusion is disposed on an outer circumferential surface of the second mounting bracket 212 of the condenser 210. During a process in which the second mounting bracket 212 passes through the second connecting hole 2331, the protrusion slides in the groove 2332 to perform movement guidance. Moreover, the arrangement of the protrusion and the groove 2332 ensures that the second sleeve 233 and the second mounting bracket 212 are connected in a preset orientation.

In some embodiments, as shown in FIG. 12, the second mounting member 231 is a housing structure having an accommodating cavity 2311 therein, and the main body portion 2321 is disposed in the accommodating cavity 2311. An outer peripheral surface of the second mounting member 231 is recessed to form an injection molding groove 2312, and an injection molding hole 2313 in communication with the accommodating cavity 2311 is defined in a groove wall of the injection molding groove 2312. The second vibration-damping member 232 includes a first injection molding portion 2324 and a second injection molding portion 2325, the first injection molding portion 2324 is formed in the injection molding groove 2312 through an injection molding process, the second injection molding portion 2325 is formed in the injection molding hole 2313 through an injection molding process, and the first injection molding portion 2324 is connected to the main body portion 2321 located in the accommodating cavity 2311 through the second injection molding portion 2325, so that the first injection molding portion 2324, the second injection molding portion 2325, and the main body portion 2321 are integrally formed through injection molding. Both sides of the first injection molding portion 2324 in the thickness direction of the second buffer structure 230 are limited by the groove wall of the injection molding groove 2312, and the first injection molding portion 2324 and the main body portion 2321 are respectively located on outer and inner sides of the second mounting member 231. Thus, the second vibration-damping member 232 and the second mounting member 231 are connected as an integral structure, and the displacement of the second vibration-damping member 232 is limited by the second mounting member 231.

In some embodiments, the second mounting member 231 is provided with a connection structure for connecting to the vehicle frame. The connection structure may be a detachable connection structure such as a bolt, a snap-fit, or the like, to facilitate disassembly and replacement of the condenser 210. In an embodiment shown in FIG. 12, elastic snaps 2314 are provided on two opposite sides of the second mounting member 231, and corresponding snap bosses are provided on the vehicle frame. During the process of mounting the second mounting member 231 to the vehicle frame, an operator squeezes the elastic snaps 2314 on both sides to drive the elastic snaps 2314 to deform, thereby reducing a distance between the two elastic snaps 2314. This allows the elastic snaps 2314 to be inserted into the openings on the vehicle frame. Then, the elastic snaps 2314 are released from the elastic deformation state, and the elastic snaps 2314 return to their original shape. The distance between the two elastic snaps 2314 increases, causing the two elastic snaps 2314 to abut against the snap bosses on the vehicle frame, thereby realizing the connection between the second buffer structure 230 and the vehicle frame.

It should be noted that by achieving the connection with the vehicle frame through the elastic snaps 2314, on the one hand, the disassembly and assembly are relatively convenient; and on the other hand, the connection strength of the snap-fit is lower than that of the connection manner such as bolting. When the vehicle is involved in an accident and the impact force thereof exceeds a buffer threshold of the second buffer structure 230, the condenser 210 and the vehicle frame are separated from each other by breaking the elastic snaps 2314, thereby reducing the damage to the vehicle frame.

An embodiment of a second aspect of the present disclosure provides a vehicle, including a vehicle body and the front-end anti-collision assembly mentioned in the foregoing embodiments, where the front-end anti-collision assembly is connected to the vehicle body and is located at a front end of the vehicle body.

It should be noted that the vehicle mentioned in the present disclosure may be a private vehicle, for example, a car, an SUV, an MPV, a pickup truck, or the like. The vehicle may also be a commercial vehicle, such as a van, a bus, a minivan, a large trailer, or the like. The vehicle may be a fuel vehicle or a new energy vehicle. When the vehicle is a new energy vehicle, the vehicle may be a hybrid vehicle or a pure electric vehicle.

The embodiments of the present disclosure have been described in detail above with reference to the accompanying drawings. However, the present disclosure is not limited to the above embodiments, and various changes may be made by those of ordinary skill in the art within their knowledge scope without departing from the purpose of the present disclosure. In addition, the embodiments and the features in the embodiments of the present disclosure may be combined with each other without conflict.

## Claims

1. A front-end anti-collision assembly, comprising an anti-collision cross-member structure, a condenser component, and an adapter bracket,
wherein the condenser component comprises a condenser, a first buffer structure, and a second buffer structure, the first buffer structure and the second buffer structure are respectively connected to two ends of the condenser in a vertical direction, the first buffer structure is connected to the adapter bracket, and the second buffer structure is configured for connection with a vehicle frame;
wherein the adapter bracket connects the anti-collision cross-member structure and the first buffer structure; and
wherein when the front-end anti-collision assembly is subjected to a frontal impact, the anti-collision cross-member structure pushes the first buffer structure to be separated from the adapter bracket, and the second buffer structure is configured for maintaining a flexible connection with the vehicle frame.

2. The front-end anti-collision assembly according to claim 1, wherein the anti-collision cross-member structure further comprises a positioning member disposed on a side of the anti-collision cross-member structure facing the first buffer structure, the first buffer structure comprises a pushing member extending toward the positioning member, and one of the positioning member and the pushing member is inserted into the other one of the positioning member and the pushing member, and the positioning member and the pushing member are slidable relative to each other in an impact direction to guide the anti-collision cross-member structure to abut against the pushing member during a collision.

3. The front-end anti-collision assembly according to claim 2, wherein the first buffer structure further comprises a first mounting member connected to the pushing member, a guide groove is defined in the pushing member and extends in the impact direction, and the positioning member is inserted into the guide groove; and wherein an inner diameter of an end of the guide groove close to the positioning member is less than an inner diameter of an end of the guide groove close to the first mounting member.

4. The front-end anti-collision assembly according to claim 1, further comprising a first connecting member, wherein a first mounting hole is defined in the adapter bracket, and the first connecting member passes through the first mounting hole and is connected to the first buffer structure; and
wherein the first mounting hole has an opening at an end of the first mounting hole facing a rear of a vehicle; and when the anti-collision cross-member structure pushes the first buffer structure toward the rear of the vehicle, the first connecting member is disengaged from the first mounting hole to separate the first buffer structure from the adapter bracket.

5. The front-end anti-collision assembly according to claim 1, wherein the anti-collision cross-member structure comprises a cross member, an energy absorption box, and a baffle plate, the cross member extends in a width direction of a vehicle, the energy absorption box extends in a length direction of the vehicle, the baffle plate is connected to the cross member and the energy absorption box, the baffle plate comprises a first vibration-damping cavity, and at least one first reinforcing rib is disposed in the first vibration-damping cavity; and
wherein along the length direction of the vehicle, a projection area of the energy absorption box onto the baffle plate falls within a range of the baffle plate.

6. The front-end anti-collision assembly according to claim 5, wherein the first vibration-damping cavity comprises a front cavity wall and a rear cavity wall in the length direction of the vehicle, and the at least one first reinforcing rib extends in a horizontal direction and is connected to the front cavity wall and the rear cavity wall.

7. The front-end anti-collision assembly according to claim 5, wherein the anti-collision cross-member structure further comprises a positioning member connected to the baffle plate, the first buffer structure comprises a pushing member extending toward the positioning member, one of the positioning member and the pushing member is inserted into the other one of the positioning member and the pushing member, and the positioning member and the pushing member are slidable relative to each other in an impact direction to guide the anti-collision cross-member structure to abut against the pushing member during a collision.

8. The front-end anti-collision assembly according to claim 1, wherein the second buffer structure comprises a second vibration-damping member and a second mounting member configured for connection with the vehicle frame, the second vibration-damping member comprises a main body portion, a connecting portion, and an elastic portion, the main body portion is connected to the second mounting member, the connecting portion is configured for connection with the condenser, and the elastic portion is connected to the main body portion and the connecting portion; and wherein the elastic portion is configured for undergoing elastic deformation to provide buffering when the condenser is subjected to an impact.

9. The front-end anti-collision assembly according to claim 8, wherein a mounting cavity is defined in the main body portion, the connecting portion is disposed in the mounting cavity, the connecting portion is spaced apart from a cavity wall of the mounting cavity, and the connecting portion is connected to the cavity wall of the mounting cavity through the elastic portion.

10. The front-end anti-collision assembly according to claim 3, wherein a first mounting bracket and a second mounting bracket are respectively provided on an upper end and a lower end of the condenser, the first mounting bracket is configured for connection with the first buffer structure, and the second mounting bracket is configured for connection with the second buffer structure.

11. The front-end anti-collision assembly according to claim 10, wherein the first buffer structure further comprises a first vibration-damping member configured for connection with the first mounting bracket; and wherein the first mounting member comprises an accommodating cavity, and the first vibration-damping member is disposed in the accommodating cavity and is connected to the first mounting member through an elastic arm of the first vibration-damping member.

12. The front-end anti-collision assembly according to claim 5, wherein the anti-collision cross-member structure further comprises a support member, and two ends of the support member are respectively connected to the energy absorption box and the cross member.

13. The front-end anti-collision assembly according to claim 5, wherein the baffle plate is connected to a top wall of the cross member, one end of the support member is connected to a bottom wall of the energy absorption box, and another end of the support member is connected to the cross member, so as to form a triangular structure among the cross member, the baffle plate, and the energy absorption box.

14. The front-end anti-collision assembly according to claim 5, wherein a second vibration-damping cavity is defined inside the energy absorption box, at least one second reinforcing rib is provided in the second vibration-damping cavity, and the at least one second reinforcing rib is vertically arranged to connect a top cavity wall and a bottom cavity wall of the second vibration-damping cavity; or
the at least one second reinforcing rib is horizontally arranged to connect a left cavity wall and a right cavity wall of the second vibration-damping cavity.

15. A vehicle, comprising:
a vehicle body; and
the front-end anti-collision assembly according to any one of claims 1 to 14, wherein the front-end anti-collision assembly is connected to the vehicle body and is located at a front end of the vehicle body.
